# EUROPÄISCHE PATENTSCHRIFT

(11) **EP 0 605 855 B1**
(45) Veröffentlichungstag und Bekanntmachung des Hinweises auf die Patenterteilung: **04.03.1998**
(21) Anmeldenummer: 93120854.0
(22) Anmeldetag: 23.12.1993
(51) Int. Cl.: C08L 67/06, C08G 63/52

(54) **Schwundarm härtbare Polyester-Formmassen**
Curable polyester moulding compositions having low shrinkage
Compositions à mouler de polyester durcissable à faible retrait

(30) Priorität: 02.01.1993 DE 4300019
(43) Veröffentlichungstag der Anmeldung: 13.07.1994
(73) Patentinhaber: DSM RESINS B.V., 8022 AW Zwolle (NL)
(72) Erfinder: Hesse, Anton, Dr., D-69469 Weinheim (DE); Zwecker, Joachim, Dr., D-69469 Weinheim (DE); Goffing, Friedrich, Dr., D-67117 Limburgerhof (DE); Duell-Muehlbach, Ines, D-67269 Gruenstadt (DE)
(74) Vertreter: den Hartog, Jeroen Hendrikus Joseph

(56) Entgegenhaltungen:
- EP-A- 0 074 746
- EP-A- 0 171 591
- EP-A- 0 319 203
- EP-A- 0 536 629
- DE-B- 1 029 147
- POLYMER ENGINEERING AND SCIENCE Bd. 22, Nr. 9 , 1982 Seiten 556 - 559 S. N. TONG AND H. K. HORNG 'Unsaturated Polyesters from 2,2-Dimethyl-1,3-propanediol'
- CHEMICAL ABSTRACTS, vol. 83, no. 4, 28. Juli 1975, Columbus, Ohio, US; abstract no. 29400e, TAKAISHI, KATSUTOSHI ET AL 'Molding of unsaturated polyesters' Seite 61 ;Spalte R ; & JP-A-50 005 463 (MATSUSHITA ELECTRIC WORKS, LTD)
- Polyesters and their Applications, Seiten 162-165, Johan Bjonrksten, Reinhold Publishing Corp., New York, 1956.

## Beschreibung

Die Erfindung betrifft eine schwundarm härtbare Formmasse auf Basis von ungesättigten Polyesterharzen, die ein thermoplastisches Polymeres als Mittel zur Schwundkompensation enthalten.

Formmassen aus ungesättigten Polyesterharzen mit Zusätzen von Verstärkungsfasern und Füllstoffen ergeben nach der Härtung Form-Teile mit hoher Festigkeit, Wärmeformbeständigkeit und Lösungsmittelbeständigkeit. Sie haben daher zur Herstellung von Konstruktionswerkstoffen, z.B. im Automobilbau, eine große Bedeutung erlangt. Ein Problem stellt aber die Neigung der Formmassen dar, beim Härtungsvorgang zu schwinden, was zu inneren Spannungen, zur Bildung von Einfallstellen, Verzugserscheinung und Oberflächenwelligkeit führt.

Durch Zusatz bestimmter thermoplastischer Polymerer kann dieser Polymerisationsschwund reduziert werden.

Bewährt hat sich beispielsweise ein Niederschrumpfsystem, bei dem einem ungesättigten Polyester aus Maleinsäure und Propylenglykol ein carboxylgruppenhaltiges Polyvinylacetat zugesetzt wird.

Derartige Niederschrumpfungssysteme neigen jedoch häufig bei Lagerung, insbesondere während der Eindickung, zu Phasenseparationen im Halbzeug, was schließlich Lunker und Poren im Formteil verursacht. Dies macht aufwendige Nacharbeiten zur Fehlerbeseitigung notwendig. Selbst wenn keine Fehlstellen dieser Art erkennbar sind, stören aber dennoch häufig Fleckenbildung und lokale Pigmentanreicherungen in der Formteiloberfläche als Folge von unerwünschten Phasenseparationen in den Formmassen. Ziel der Erfindung war es deshalb, Formmassen bereitzustellen, die die beschriebenen Mängel nicht mehr aufweisen, ohne Einbußen hinsichtlich Schwundverhalten und Oberflächenwelligkeit sowie Glanz hinnehmen zu müssen.

Es wurde gefunden, daß dieses Ziel erreicht wird, wenn man ungesättigte Polyester einsetzt, deren Glykolkomponente aus Propylenglykol und Neopentylglykol besteht.

Gegenstand der Erfindung sind demzufolge schwundarm härtbare Formmassen, enthaltend
A. 100 Gew.-Teile einer Mischung aus
   20-70 Gew.-% eines ungesättigten Polyesters und
   80-30 Gew.-% Styrol
B. 3-50 Gew.-Teile eines gegebenenfalls carboxylgruppenhaltigen Polyvinylacetats oder Polymethylmethacrylats und/oder eines oligomeren gesättigten Polyesters oder Polyesterurethans, wobei gesättigte Polyester auf Basis von Tetrahydrophthalsäure ausgeschlossen sind.
C. 0-500 Gew.-Teile Verstärkungsfasern und/oder Füllstoffe
D. 0,1-4 Gew.-Teile Radikalinitiatoren,
E. gegebenenfalls weitere übliche Zusatzstoffe,
   wobei der ungesättigte Polyester aus folgenden Molekülbausteinen aufgebaut ist:
   a)
      100-85 Mol-% Fumarsäure und/oder Maleinsäure,
      0-15 Mol-% o-Phthalsäure, Tetrahydrophthalsäure oder Adipinsäure einerseits und
   b)
      95-50 Mol-% Propylenglykol,
      0-20 Mol-% Butandiol - 1,2 und
      5-30 Mol-% Neopentylglykol
      andererseits.

In EP-A 319 203 sind härtbare Formmassen aus einem ungesättigten Polyester und säuremodifiziertem Polyvinylacetat oder einem ungesättigten Polyester als Niederschrumpfkomponente beschrieben. In den Beispielen wird ein ungesättigter Polyester aus Maleinsäure und einer Mischung von Propylenglykol und Neopentylglykol im Molverhältnis von 1:1 eingesetzt. Eine Nacharbeitung zeigt, daß hierbei die Schrumpfkompensation nicht ausreichend ist.

Die EP-A-0 536 629 betrifft schwundarm härtbare Formmassen aus einem ungesättigten Polyester und einem gesättigten Polyester auf Basis von Tetrahydrophthalsäure. Der ungesättigte Polyester ist aus Maleinsäure und Propylenglykol aufgebaut, welches teilweise durch andere Glykole, z.B. Neopentylglykol ersetzt werden kann. Bevorzugt ist aber ein Polykondensationsprodukt aus Maleinsäure, Propylenglykol und Dipropylenglykol. Es hat sich gezeigt, daß auch derartige Niederschrumpfungssysteme keine ausreichende Schrumpfkompensation aufweisen.

Zu den einzelnen Komponenten ist folgendes zu sagen:
A. Bevorzugte ungesättigte Polyester werden durch Polykondensation von Maleinsäureanhydrid und einer Mischung von Propylenglykol und Neopentylglykol hergestellt. Dabei isomerieren die Doppelbindungen der Maleinsäure weitgehend von der cis- in die trans-Struktur, so daß der ungesättigte Polyester überwiegend Fumarsäureeinheiten enthält. Bei der Polykondensation wird im allgemeinen die Glykolkomponente im Überschuß eingesetzt, so daß der Polyester überwiegend OH-Endgruppen enthält. Folglich enthält auch der Polyester um etwa 1 bis 20 Mol-% mehr Glykoleinheiten als Dicarbonsäureeinheiten. Die ungesättigten Polyester weisen vorzugsweise eine Säurezahl zwischen 10 und 50 auf (gemessen durch Titration des in Toluol/Ethanol gelösten ungesättigten Polyesters mit 0,1 n methanolischer KOH) und ein mittleres Molekulargewicht (Zahlenmittel) zwischen 500 und 5000 g/Mol (gemessen durch Bestimmung der Säurezahl und OH-Zahl).
   Bevorzugt wird Styrol als alleiniges Comonomer eingesetzt. Es kann aber zu bis zu 40 Gew.-% durch andere übliche Comonomere, z.B. Vinyltoluol, α-Methylstyrol, Allylverbindungen oder (Meth-)Acrylate ersetzt sein.
B. Als Thermoplastkomponenten kommen entweder hochmolekulare Polyvinylacetate oder Polymethylmethacrylate in Frage oder oligomere gesättigte Polyester oder Polyesterurethane. Besondere Effekte werden erzielt, wenn man Mischungen von Hochpolymeren und Oligomeren (z.B. nach EP-A 171 591) einsetzt. Bis zu 30 Gew.-% der Thermoplastkomponente B kann durch andere Thermoplasten, wie z.B. Polystyrol, Polyethylen oder Polypropylen ersetzt sein.
   Die carboxylgruppenhaltigen Hochpolymeren weisen vorzugsweise eine Säurezahl zwischen 2 und 15, insbesondere zwischen 3 und 10, auf; sie werden hergestellt durch Copolymerisation von Vinylacetat bzw. Methylmethacrylat mit Methacrylsäure, Acrylsäure oder einem Maleinsäurehalbester.
   Die Oligomeren weisen vorzugsweise ein mittleres Molekulargewicht zwischen 1.000 und 15.000, insbesondere zwischen 2.000 und 10.000 auf.
C. Füllstoffe, wie Kreide, Quarz, Koalin oder Aluminiumoxidhydrat können in Mengen von 0 bis 200 Gew.-%, bezogen auf A anwesend sein, Verstärkungsfasern in Mengen von 0 bis 300 Gew.-%, vorzugsweise von 20 bis 200 Gew.-%.
D. Für die Härtung werden vorzugsweise solche Peroxide eingesetzt, die bei 120 bis 180°C wirksam sind, z.B. tert.-Butylperoxid, tert.-Butylperbenzoat und 1,1-Di(tert.-butylperoxy)-3,3,5-trimethylcyclohexan.
E. Die erfindungsgemäße Formmasse kann ferner die üblichen Zusatzstoffe enthalten, wie z.B. innere Trennmittel, Inhibitoren und Beschleuniger, sowie insbesondere Eindickmittel, vorzugsweise Magnesiumhydroxid und Magnesiumoxid.
   Besonders günstig ist der Zusatz von 1 bis 10 Gew.-%, bezogen auf A, eines Polypropylenoxids, vorzugsweise mit einem mittleren Molekulargewicht von 200 bis 2000, insbesondere von 600 bis 1500. Dieses wirkt nicht nur als Netzmittel zur Erniedrigung der Pastenviskosität und besseren Imprägnierung der Glasfasern mit dem Harz, sondern es hat auch einen positiven Einfluß auf die Oberfläche der gehärteten Formteile, in dem es im ungehärteten Halbzeug eine vorzeitige Phasenseparation unterdrückt und dadurch die Bildung von Unregelmäßigkeiten und Flecken auf der Oberfläche verhindert.

Die erfindungsgemäß hergestellten Formteile finden insbesondere als Karrosserieteile in Kraftfahrzeugen Verwendung, sowie im Elektrosektor und im Maschinenbau.

Die in den Beispielen genannten Teile und Prozente beziehen sich auf das Gewicht.

### Beispiele

### Herstellung der ungesättigten Polyesterharze

### A1 (Vergleich)

Ein ungesättigter Polyester mit Säurezahl 31 wurde hergestellt durch Schmelzekondensation unter Stickstoff von Maleinsäureanhydrid und Propylenglykol im Molverhältnis 1:1,03. Er wurde 66%ig in Styrol gelöst und mit 120 ppm Hydrochinon stabilisiert.

### A2 (Vergleich)

Ein ungesättigter Polyester mit Säurezahl 22,5 wurde hergestellt durch Schmelzekondensation unter Stickstoff von Maleinsäureanhydrid, Neopentylglykol und Propylenglykol im Molverhältnis 1:0,4:0,7. Er wurde 65%ig in Styrol gelöst und mit 120 ppm Hydrochinon stabilisiert.

### A3 (Vergleich EP 319 203)

Ein ungesättigter Polyester mit Säurezahl 22,5 wurde hergestellt durch Schmelzekondensation unter Stickstoff von Maleinsäureanhydrid, Neopentylglykol und Propylenglykol im Molverhältnis 1:0,53:0,53. Er wurde 65%ig in Styrol gelöst und mit 120 ppm Hydrochinon stabilisiert.

### A4 (Vergleich EP-A-0 536 629)

Ein ungesättigter Polyester wurde hergestellt durch Schmelzekondensation von Maleinsäureanhydrid, Propylenglykol und Dipropylenglykol im Molverhältnis 1:0,8:0,3. Er wurde 72%ig in Styrol gelöst und mit 100 ppm Hydrochinon stabilisiert.

### A5 (Beispiel)

Ein ungesättigter Polyester mit Säurezahl 25 wurde hergestellt durch Schmelzekondensation von Maleinsäureanhydrid, Propylenglykol und Neopentylglykol im Molverhältnis 1:0,9:0,2. Er wurde 66%ig in Styrol gelöst und mit 120 ppm Hydrochinon stabilisiert.

### A6 (Beispiel)

Ein ungesättigter Polyester mit Säurezahl 20 wurde hergestellt durch Schmelzekondensation unter Stickstoff von Maleinsäureanhydrid, Propylenglykol und Neopentylglykol im Molverhältnis 1:1:0,1. Er wurde 67%ig in Styrol gelöst und mit 120 ppm Hydrochinon stabilisiert.

### B. Polymerlösungen für die Schrumpfkompensation

Zur Herstellung der Lösungen wurden Granulate der Polymeren B bei Raumtemperatur in Styrol gerührt, das - bezogen auf Lösung - 1200 ppm 2,6-Dimethylchinon enthielt. Tabelle 1 gibt Auskunft über Zusammensetzung und Kenndaten der Polymeren.

**Tabelle 1**

| Polymer | Aufbau | Säurezahl | Molekular-gew. Mn | Styrolgehalt |
|---|---|---|---|---|
| B1 | Polyvinylacetat mit Carboxylgruppen | 7 | 90.000 | 65 |
| B2 | Polymethylmethacrylat mit Carboxylgruppen | 5,5 | 130.000 | 63 |
| B3 | Polyester aus Adipinsäure, Ethylenglykol und Propylenglykol, Molverhältnis 1:0,62:0,38 | 12 | 5.000 | 40 |

### Beispiel 1

Es wird eine Mischung hergestellt aus
- 60 Tl.: Harz A (65% in Styrol)
- 40 Tl.: Polymerlösung B1 (35% in Styrol)
- 5,0 Tl.: Styrol
- 1,5 Tl.: tert.-Butylperbenzoat
- 4,0 Tl.: Zinkstearat
- 3,0 Tl.: MgO-Paste (®LUVATOL MK 35)
- 190 Tl.: Kreide (®Millicarb).

Auf einer SMC-Maschine werden
- 72 Tl.: dieser Paste mit
- 28 Tl.: Glasfasern der Schnittlänge 26 mm zu einem flächigen Halbzeug (SMC) verarbeitet. Nach 7-tägiger Reifung bei Raumtemperatur wird 2 min lang bei 155°C verpreßt. Die Preßteile werden auf ihre Homogenität (Anzahl heller Flecken auf einer Platte 60x20x0,4 cm) und ihren Schrumpf (Einfall an der Stelle oberhalb einer Rippe, gemessen in mm) geprüft.

**Tabelle 2**

| Ungesättigter Polyester | Homogenität (Anzahl der Flecken) | Schrumpf (Einfall in mm) |
|---|---|---|
| A1 | >10 | 0 |
| A2 | 0 | >0,5 |
| A3 | 0 | >0,6 |
| A4 | 0 | >0,6 |
| A5 | 0 | 0 |
| A6 | 0 | 0 |

Die Versuche mit den ungesättigten Polyestern A5 und A6 sind erfindungsgemäß.

### Beispiel 2

Es wird eine Mischung hergestellt aus:
- 60 Tl.: Harz A5
- 40 Tl.: Polymerlösung B2
- 1,5 Tl.: tert. Butylperbenzoat
- 4,5 Tl.: Zinkstearat
- 2,0 Tl.: MgO-Paste
- 180 Tl.: Kreide

72 Teile dieser Paste werden mit 28 Teilen Glasfasern zu einem SMC-Halbzeug verarbeitet, welches zu einem schwundfreien, homogenen Formteil ausgehärtet wird.

### Beispiel 3

Es wird eine Mischung hergestellt aus
- 50,5 Tl.: Harz A5 (65%ig in Styrol)
- 21,5 Tl.: Polymerlösung B1 (35% in Styrol)
- 16,0 Tl.: Polymerlösung B3 (60% in Styrol)
- 5,0 Tl.: Polyproylenoxid MG 900 (®PLURIOL P 900)
- 14,0 Tl.: Styrol
- 1,5 Tl.: tert.-Butylperbenzoat
- 4,0 Tl.: Zinkstearat
- 2,0 Tl.: MgO-Paste
- 200 Tl.: Kreide

75 Teile dieser Paste werden mit 25 Teilen Schnittglasfasern der Länge 26 mm zu einem flächigen Halbzeug verarbeitet. Nach siebentägiger Reifung bei Raumtemperatur wird bei 140°C 1 min verpreßt. Das erhaltene Preßteil weist eine hervorragend glatte Oberfläche auf. Es kann mit üblichen Lacken lackiert werden.

## Patentansprüche

1. Schwundarm härtbare Formmassen, enthaltend
A.
100 Gew.-Teile einer Mischung aus
20-70 Gew.-% eines ungesättigten Polyesters und
80-30 Gew.-% Styrol,
B.
3-50 Gew.-Teile eines gegebenenfalls carboxylhaltigen Polyvinylacetats oder Polymethylmethacrylats und/oder eines oligomeren gesättigten Polyesters oder Polyesterurethans, wobei gesättigte Polyester auf Basis von Tetrahydrophthalsäure ausgeschlossen sind,
C.
0-500 Gew.-Teile Verstärkungsfasern, und/oder Füllstoffe
D.
0,1-4 Gew.-Teile Radikalinitiatoren,
E.
gegebenenfalls weitere übliche Zusatzstoffe,
dadurch gekennzeichnet, daß der ungesättigte Polyester aus folgenden Molekülbausteinen aufgebaut ist:
a)
100-85 Mol-% Fumarsäure und/oder Maleinsäure,
0-15 Mol-% o-Phthalsäure, Tetrahydrophthalsäure oder Adipinsäure einerseits und
b)
95-50 Mol-% Propylenglykol,
0-20 Mol-% Butandiol-1,2 und
5-30 Mol-% Neopentylglykol
andererseits.

2. Schwundarm härtbare Formmassen nach Anspruch 1, dadurch gekennzeichnet, daß die Komponente B ein carboxylgruppenhaltiges Polyvinylacetat oder Polymethylmethycrylat mit einer Säurezahl zwischen 2 und 15 ist.

3. Schwundarm härtbare Formmassen nach Anspruch 1, dadurch gekennzeichnet, daß die Komponente B ein oligomerer gesättigter Polyester oder ein Polyesterurethan mit einem mittleren Molekulargewicht zwischen 1.000 und 15.000 ist.

4. Schwundarm härtbare Formmassen nach Anspruch 1, dadurch gekennzeichnet, daß sie, bezogen auf A, 1 bis 10 Gew.-% eines Polypropylenoxids mit einem mittleren Molekulargewicht zwischen 200 und 2000 enthält.

## Claims

1. Low-shrinkage curable moulding compositions containing
A.
100 parts by weight of a mixture of
20 to 70% by weight of an unsaturated polyester and
80 to 30% by weight of styrene,
B.
3 to 50 parts by weight of a polyvinylacetate or polymethylmethacrylate optionally containing carboxyl groups and/or of an oligomeric saturated polyester or polyester urethane, saturated polyesters based on tetrahydrophthalic acid being ruled out,
C.
0 to 500 parts by weight of reinforcing fibres and/or fillers
D.
0.1 to 4 parts by weight of radical initiators,
E.
optionally further conventional additives,
characterised in that the unsaturated polyester is made up of the following molecular units:
a)
100 to 85 mol % of fumaric acid and/or maleic acid,
0 to 15 mol % of o-phthalic acid,
tetrahydrophthalic acid or adipic acid on the one hand and
b)
95 to 50 mol % of propylene glycol,
0 to 20 mol % of butanediol-1,2 and
5 to 30 mol % of neopentyl glycol
on the other hand.

2. Low-shrinkage curable moulding compositions according to claim 1, characterised in that component B is a carboxyl group-containing polyvinylacetate or polymethylmethacrylate having an acid number between 2 and 15.

3. Low-shrinkage curable moulding compositions according to claim 1, characterised in that component B is an oligomeric saturated polyester or a polyester urethane having an average molecular weight between 1,000 and 15,000.

4. Low-shrinkage curable moulding compositions according to claim 1, characterised in that they contain 1 to 10% by weight of a polypropylene oxide having an average molecular weight between 200 and 2,000, with respect to A.

## Revendications

1. Mélanges à mouler pouvant durcir avec un faible retrait, contenant
A.
100 parties en poids d'un mélange
de 20-70 % en poids d'un polyester insaturé et
de 80-30 % en poids de styrène,
B.
de 3-50 parties en poids d'un poly(acétate de vinyle) ou poly(méthacrylate de méthyle) contenant éventuellement des groupes carboxyle, et/ou d'un polyester saturé oligomère ou d'un polyesteruréthanne à l'exclusion des polyesters saturés à base d'acide tétrahydrophtalique,
C.
de 0-500 parties en poids de fibres de renforcement et/ou de matières de charge,
D.
de 0,1-4 parties en poids d'amorceurs radicalaires,
E.
éventuellement d'autres additifs usuels,
caractérisé en ce que le polyester insaturé est composé des constituants suivants :
a)
de 100-85 % en moles d'acide fumarique et/ou d'acide maléique,
de 0-15 % en moles d'acide o-phtalique, d'acide tétrahydrophtalique ou d'acide adipique d'une part, et
b)
de 95-50 % en moles de propylèneglycol,
de 0-20 % en moles de butanediol-1,2 et
de 5-30 % en moles de néopentylglycol,
d'autre part.

2. Mélanges à mouler pouvant durcir avec un faible retrait selon la revendication 1, caractérisés en ce que le constituant B est un poly(acétate de vinyle) ou un poly(méthacrylate de méthyle) contenant des groupes carboxyle et ayant un indice d'acide de 2 à 15.

3. Mélanges à mouler pouvant durcir avec un faible retrait selon la revendication 1, caractérisés en ce que le constituant B est un polyester ou un polyesteruréthanne saturé oligomère ayant une masse moléculaire moyenne de 1000 à 15 000.

4. Mélanges à mouler pouvant durcir avec un faible retrait selon la revendication 1, caractérisés en ce qu'ils contiennent, par rapport à A, de 1 à 10 % en poids d'un poly(oxyde de propylène) ayant une masse moléculaire moyenne de 200 à 2000.
